# EUROPEAN PATENT APPLICATION

(11) **EP 4 528 562 A1**
(43) Date of publication of application: **26.03.2025**
(21) Application number: 22942685.3
(22) Date of filing: 18.05.2022
(51) Int. Cl.: G06F 21/55, B60R 16/02

(54) **ATTACK SOURCE IDENTIFICATION SYSTEM, ATTACK SOURCE IDENTIFICATION DEVICE, ATTACK SOURCE IDENTIFICATION METHOD, AND PROGRAM**

(71) Applicant: Nippon Telegraph And Telephone Corporation, Chiyoda-ku Tokyo 100-8116 (JP)
(72) Inventor: OKANO, Yasushi, Musashino-shi, Tokyo 180-8585 (JP); MATSUBAYASHI, Masaru, Musashino-shi, Tokyo 180-8585 (JP); TANAKA, Masashi, Musashino-shi, Tokyo 180-8585 (JP); KOYAMA, Takuma, Musashino-shi, Tokyo 180-8585 (JP)
(74) Representative: Murgitroyd & Company
(86) International application number: PCT/JP2022/020736
(87) International publication number: WO 2023/223480

(57) **Abstract**

An attack source identifying system according to an aspect of the present disclosure is an attack source identifying system including: a plurality of electronic control devices; a gateway device communicably connected to the plurality of electronic control devices; and an analysis device communicably connected to the plurality of electronic control devices, wherein each of the electronic control devices includes: a creation unit configured to create history information of messages transmitted from a process executed by the electronic control device; and a transmission unit configured to transmit at least a part of the history information to the analysis device, the gateway device includes a detection unit configured to detect an attack message from messages transmitted and received by the plurality of electronic control devices, and the analysis device includes an identification unit configured to identify a transmission source of the attack message by using detection information related to the attack message and information received from the plurality of electronic control devices in a case where the attack message is detected.

## Description

### Technical Field

The present disclosure relates to an attack source identifying system, an attack source identifying apparatus, an attack source identifying method, and a program.

### Background Art

Some machines such as a vehicle (for example, an automobile, a special vehicle, a motorcycle, a bicycle, or the like), a machine tool, a construction machine, an agricultural machine, and an industrial machine are equipped with a plurality of electronic control units (ECUs). In addition, a typical communication network between these ECUs is a controller area network (CAN). Communication between the ECUs on the CAN (also referred to as CAN communication or a CAN message, or simply referred to as a message) includes an ID (also referred to as a CAN-ID) and a payload. The CAN-ID is used for identification of data contents, transmission nodes, and the like, determination of priority order of communication arbitration, and the like. In the payload, data of up to 8 bytes is mounted, and the data includes values of one or more signals. Taking a vehicle as an example, there are signals related to states and control of speed, lateral speed, an accelerator, a brake, acceleration, a steering angle, and the like.

In recent years, there is a concern about a risk of a cyberattack on a communication network such as a CAN (that is, a control network used for controlling machines). For example, it is known that connecting an unauthorized ECU to a network or illegally rewriting an operation of an existing ECU makes it possible to insert attack transmission of a CAN-ID related to an attack target function and to induce an unauthorized operation of the attack target function. As systems for detecting such an attack on a CAN, various systems have been studied. For example, Non Patent Literature 1 discloses a system of monitoring a CAN communication network and detecting insertion of an attack CAN message as an abnormality (network-type CAN-IDS). In this system, in communication of a certain CAN-ID transmitted at a constant cycle, when an attack CAN message for the CAN-ID is inserted, an observation cycle of the communication of the CAN-ID changes to a cycle shorter than the predetermined cycle, which is detected as an abnormality. Ideally, the network-type CAN-IDS is installed at a position where CAN communication can be overlooked. For example, in a central gateway (CGW) type network configuration, installing the network-type CAN-IDS in a GW is an example of an ideal installation method.

### Citation List

### Non-Patent Literature

Non Patent Literature 1: Satoshi Otsuka, Tasuku Ishigooka, "Intrusion Detection for In-vehicle Networks without Modifying Legacy ECUs", IPSJ SIG Technical Report, Vol.2013-EMB-28, No.6, pp.31-35, 2013.

### Summary of Invention

### Technical Problem

Meanwhile, in a case where a cyberattack is detected, the attack is analyzed, and one of the important purposes of the cyberattack analysis is to identify an attack source device and a malware process program in the device. However, CAN communication does not include transmission source and transmission destination addresses, and the network-type CAN-IDS cannot identify which device (and which process in the device) is the attack source.

On the other hand, a hosted CAN-IDS installed in each ECU can identify a transmission source of an attack at the same time as detection of the attack in a case where the ECU is the attack source. However, the hosted CAN-IDS may not be able to detect an attack that inserts an attack CAN message. For example, consider a case where an attack CAN message is transmitted at a predetermined cycle from an ECU connected to a CAN bus different from that of an ECU that transmits a normal CAN message. In this case, the hosted CAN-IDS of the ECU that transmits the attack CAN message cannot observe the normal CAN message because its CAN bus is different from that of the ECU that transmits the normal CAN message. Therefore, the hosted CAN-IDS of the ECU that transmits the attack CAN message may recognize an observation cycle of the attack CAN message as a predetermined cycle, and the attack may not be detected.

The present disclosure has been made in view of the above points, and provides a technique for identifying a transmission source of attack communication.

### Solution to Problem

An attack source identifying system according to an aspect of the present disclosure is an attack source identifying system including: a plurality of electronic control devices; a gateway device communicably connected to the plurality of electronic control devices; and an analysis device communicably connected to the plurality of electronic control devices, wherein each of the electronic control devices includes: a creation unit configured to create history information of messages transmitted from a process executed by the electronic control device; and a transmission unit configured to transmit at least a part of the history information to the analysis device, the gateway device includes a detection unit configured to detect an attack message from messages transmitted and received by the plurality of electronic control devices, and the analysis device includes an identification unit configured to identify a transmission source of the attack message by using detection information related to the attack message and information received from the plurality of electronic control devices in a case where the attack message is detected.

### Advantageous Effects of Invention

There is provided a technique of identifying a transmission source of attack communication.

### Brief Description of Drawings

[Fig. 1] Fig. 1 is a diagram illustrating an overall configuration of an attack source identifying system according to Example 1.
[Fig. 2] Fig. 2 is a diagram illustrating an example of a detailed functional configuration of a history collection unit.
[Fig. 3] Fig. 3 is a diagram illustrating an example of history information.
[Fig. 4] Fig. 4 is a flowchart illustrating recording and transmission processing of history information in Example 1.
[Fig. 5] Fig. 5 is a flowchart illustrating attack detection and attack source identification processing in Example 1.
[Fig. 6] Fig. 6 is a diagram illustrating an overall configuration of an attack source identifying system according to Example 2.
[Fig. 7] Fig. 7 is a flowchart illustrating recording and transmission processing of history information in Example 2.
[Fig. 8] Fig. 8 is a diagram illustrating an example of bit assignment of an excerpt of history information (part 1).
[Fig. 9] Fig. 9 is a diagram illustrating an example of bit assignment of an excerpt of history information (part 2).
[Fig. 10] Fig. 10 is a flowchart illustrating attack detection and attack source identification processing in Example 2.

### Description of Embodiments

Hereinafter, an embodiment of the present invention will be described. In the following embodiment, a CAN is assumed as a control network, and an attack source identifying system 1 capable of identifying an attack source of attack CAN communication (that is, an ECU that has transmitted the attack CAN communication, a process in the ECU, and the like) will be mainly described. The attack CAN communication refers to unauthorized CAN communication intended to make some kind of attack. Note that CAN communication may be referred to as, for example, a CAN message, or simply referred to as a message.

In the attack source identifying system 1 according to the present embodiment, attack CAN communication is detected by a network-type CAN-IDS, and in a case where attack CAN communication is detected, a history of CAN communication transmitted (output) by each ECU and the detection result are compared, so that an attack source is identified. For this purpose, the attack source identifying system according to the present embodiment mainly includes the following three functional units.

History collection unit 110: a functional unit that records, as a history, CAN communication transmitted by a process of a device such as an ECU and transmits the history to an analysis unit 310.

Detection unit 210: a functional unit that detects attack CAN communication by the network-type CAN-IDS.

Analysis unit 310: a functional unit that compares the detection result by the detection unit 210 with the history received from the history collection unit 110 to identify a transmission source of the attack CAN communication.

Hereinafter, examples of the attack source identifying system 1 according to the present embodiment will be described. Note that, in the following description, CAN is assumed as a control network, but the control network is not limited to CAN. For example, the present embodiment is similarly applicable to a case where network-type attack detection is performed on a communication protocol in which no source address is included in a communication message or a communication protocol in which, even if a source address is included, it is easy to falsify the source address.

### [Example 1]

First, Example 1 will be described. Example 1 is a case where the attack source identifying system 1 includes a monitoring network implemented by any communication system in addition to a control network implemented by CAN buses.

### <Overall configuration>

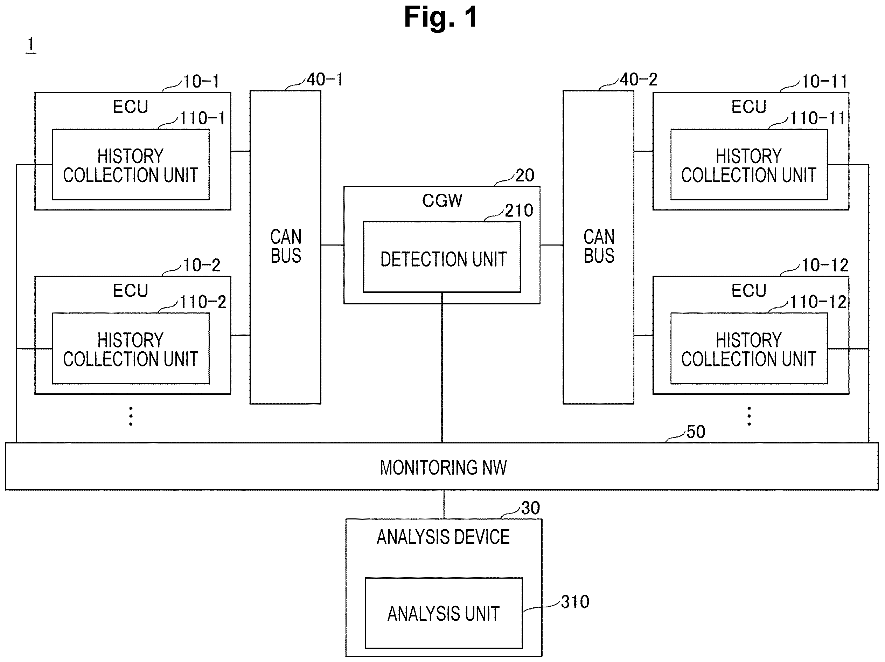

Fig. 1 illustrates an overall configuration of the attack source identifying system 1 according to Example 1. As illustrated in Fig. 1, the attack source identifying system 1 according to Example 1 includes a plurality of ECUs 10, a CGW 20, and an analysis device 30. The ECUs 10 and the CGW 20 are connected to CAN buses 40. Furthermore, each of the ECUs 10, the CGW 20, and the analysis device 30 are connected to a monitoring NW 50, which is a monitoring network.

Note that, in the example illustrated in Fig. 1, each of the plurality of ECUs 10 is denoted as "ECU 10-1", "ECU 10-2", "ECU 10-11", "ECU 10-12", or the like. In addition, the example illustrated in Fig. 1 includes the plurality of CAN buses 40, and each of the plurality of CAN buses 40 is denoted as "CAN bus 40-1", "CAN bus 40-2", or the like.

Here, the attack source identifying system 1 according to Example 1 has a central gateway type network configuration. In the example illustrated in Fig. 1, the ECU 10-1, the ECU 10-2, and the like are connected to the CAN bus 40-1, and the ECU 10-11, the ECU 10-12, and the like are connected to the CAN bus 40-2. In addition, the CGW 20 exists as a central gateway, and is connected to both the CAN bus 40-1 and the CAN bus 40-2.

The ECUs 10 are electronic control units. Each of the ECUs 10 includes a history collection unit 110. The history collection unit 110 is implemented, for example, by processing that one or more programs (including a module) held by the ECU 10 causes an arithmetic device such as a processor to execute. Note that, in the example of Fig. 1, the history collection unit 110 of the ECU 10-1 is denoted as "history collection unit 110-1", the history collection unit 110 of the ECU 10-2 is denoted as "history collection unit 110-2", the history collection unit 110 of the ECU 10-11 is denoted as "history collection unit 110-11", and the history collection unit 110 of the ECU 10-12 is denoted as "history collection unit 110-12".

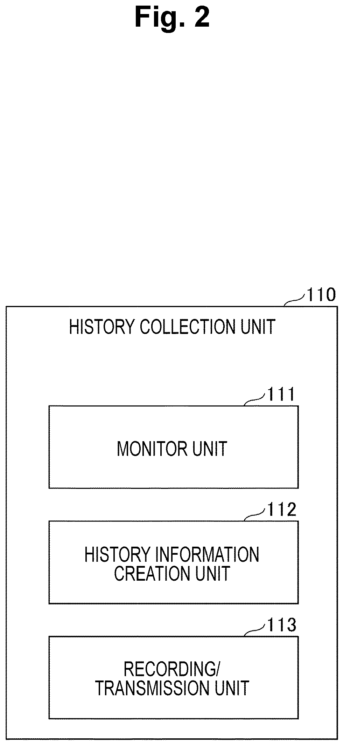

Here, Fig. 2 illustrates a detailed functional configuration of the history collection unit 110. As illustrated in Fig. 2, the history collection unit 110 includes a monitor unit 111, a history information creation unit 112, and a recording/transmission unit 113.

The monitor unit 111 monitors a process of the ECU 10 including the history collection unit 110, and in a case where the process transmits (outputs) CAN communication, the monitor unit 111 acquires, from the CAN communication, information such as a CAN-ID, a payload, and a process name of the process that has output the CAN communication. Note that the monitor unit 111 may acquire information such as a CAN-ID, a payload, and a process name not only from CAN communication transmitted by the process but also from CAN communication received by the process.

The monitor unit 111 requires high speed, and thus is preferably implemented by a kernel module or a program operating in a kernel space. In a case where the monitor unit 111 is implemented by a program operating in a kernel space, for example, extended Berkeley Packet Filter (eBPF) can be used in Linux (registered trademark), and BPF, DTrace, or the like can be used in BSD and QNX.

The history information creation unit 112 creates history information from various types of information acquired by the monitor unit 111. At this time, the history information creation unit 112 creates the history information by performing predetermined statistical processing, necessary processing, and the like on the various types of information.

The recording/transmission unit 113 records the history information created by the history information creation unit 112 in a memory included in the ECU 10, and transmits the history information to which its own ECU name is assigned to the analysis device 30 via the monitoring NW 50. Note that, when transmitting the history information to which its own ECU name is assigned to the analysis device 30, the recording/transmission unit 113 may transmit all the history information, or may select history information as necessary and transmit only a part of history information (for example, only history information that has not been transmitted yet).

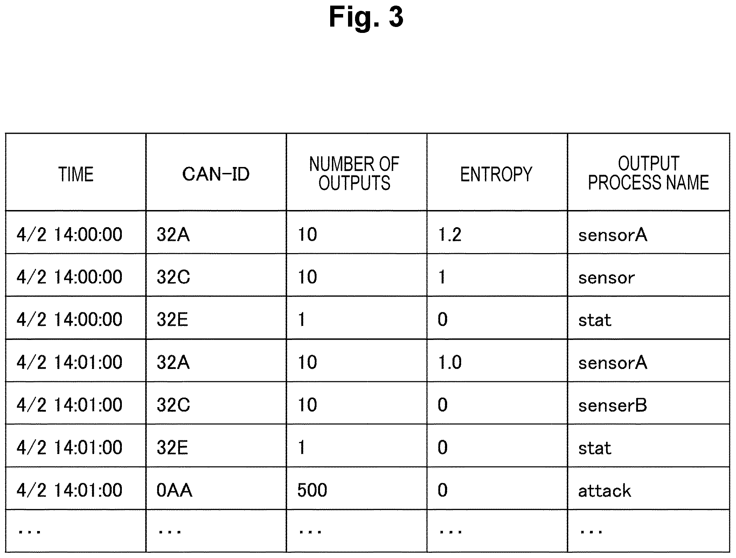

Here, Fig. 3 illustrates an example of the history information. As illustrated in Fig. 3, the history information includes a plurality of rows (records), and each row includes a time, an output CAN-ID, the number of outputs, entropy, and an output process name. Each of the rows constituting the history information is obtained by statistically processing various types of information acquired by the monitor unit 111 with the same CAN-ID every predetermined period (one minute in the example illustrated in Fig. 3). For example, the number of outputs is the number of transmissions of CAN communication having the CAN-ID in the period. Furthermore, the entropy is the magnitude of the change amount of the payload of CAN communication having the CAN-ID in the period. Note that the output process name is a process name that has output (transmitted) CAN communication having the CAN-ID.

The example illustrated in Fig. 3 is history information created by the history collection unit 110 of a certain ECU 10 from which CAN communication having one of three CAN-IDs (32A, 32C, and 32E) is usually transmitted. As illustrated in Fig. 3, in this history information, it is recorded that a malware process attack transmits many (the number of outputs "500") pieces of CAN communication of the same payload (that is, entropy "0") with the CAN-ID "0AA".

The CGW 20 is a central gateway that functions as a network-type CAN-IDS. The CGW 20 includes the detection unit 210. The detection unit 210 is implemented, for example, by processing that one or more programs (including a module) held by the CGW 20 causes an arithmetic device such as a processor to execute.

The detection unit 210 detects attack CAN communication and transmits detection information indicating the detection result to the analysis device 30 via the monitoring NW 50. The detection information includes, for example, the time at which the attack CAN communication is detected (detection time), the CAN-ID included in the attack CAN communication, and the like. Note that the detection unit 210 can detect the attack CAN communication by a system similar to a known network-type CAN-IDS.

The analysis device 30 is a device that identifies a transmission source (attack source) of the attack CAN communication. The analysis device 30 includes the analysis unit 310. The analysis unit 310 is implemented, for example, by processing that one or more programs (including a module) held by the analysis device 30 causes an arithmetic device such as a processor to execute.

The analysis unit 310 holds the history information (history information to which the ECU name is assigned) received from the history collection unit 110 in a memory of the analysis device 30. Note that the analysis unit 310 may delete (clear) the history information held in the memory, for example, in a case where a predetermined period has elapsed or in a case where history information with the same ECU name as the history information already held is received.

In addition, when receiving the detection information from the detection unit 210, the analysis unit 310 compares the detection information with the history information held in the memory, and identifies the transmission source of the attack CAN communication. That is, the analysis unit 310 compares the time (detection time) and the CAN-ID included in the detection information with times and CAN-IDs included in pieces of history information, and identifies the ECU 10 with the ECU name assigned to the history information including the matching time and CAN-ID and the process with the output process name corresponding to the time and CAN-ID as the transmission sources (attack sources) of the attack CAN communication. However, the times do not need to completely match, and may be determined to match as long as the difference therebetween falls within a predetermined range. In addition, only the CAN-IDs may be used for comparison without use of the times.

Note that the analysis device 30 may exist inside a machine (for example, a vehicle or the like) on which the ECU 10 and the CGW 20 are mounted, or may exist outside the machine and be capable of communicating with the devices in a wired or wireless manner.

### <Recording and transmission processing of history information>

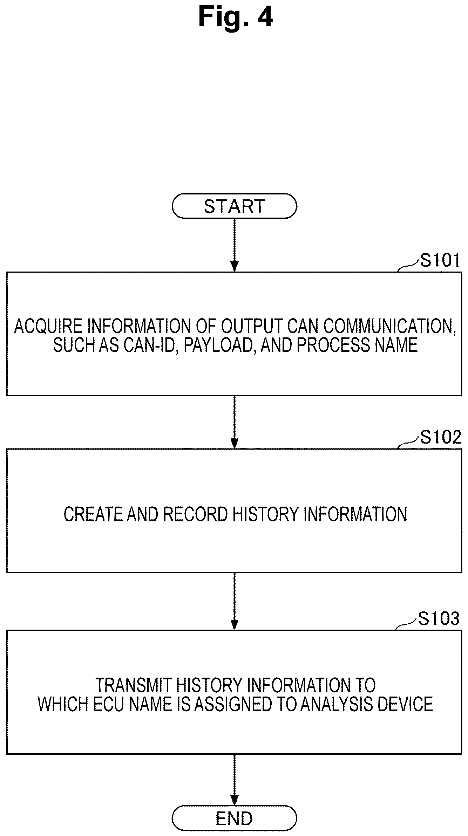

Hereinafter, recording and transmission processing of history information in Example 1 will be described with reference to Fig. 4. Hereinafter, recording and transmission processing of history information related to a certain ECU 10 will be described as an example.

Each time CAN communication is output (transmitted) from a process of the ECU 10, the monitor unit 111 of the history collection unit 110 acquires information such as a CAN-ID, a payload, and a process name from the CAN communication (step S101).

The history information creation unit 112 of the history collection unit 110 creates history information from various types of information acquired by the monitor unit 111 every predetermined period (for example, one minute) (step S102). At this time, the history information creation unit 112 creates the history information by performing predetermined statistical processing (for example, calculation of the number of outputs, calculation of entropy, and the like), necessary processing (for example, data format conversion or the like as necessary), and the like on the various types of information.

The recording/transmission unit 113 of the history collection unit 110 records the history information created by the history information creation unit 112 in a memory included in the ECU 10, and transmits the history information to which the ECU name of the ECU 10 is assigned to the analysis device 30 via the monitoring NW 50 (step S103). As a result, the history information to which the ECU name is assigned is held in the memory of the analysis device 30 by the analysis unit 310 of the analysis device 30.

### <Attack detection and attack source identification processing>

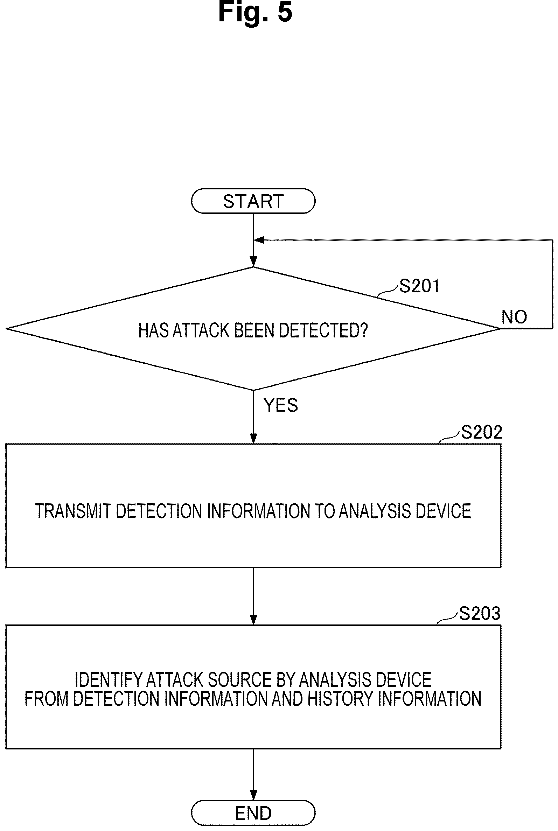

Hereinafter, attack detection and attack source identification processing in Example 1 will be described with reference to Fig. 5.

In the case of detecting attack CAN communication (YES in step S201), the detection unit 210 of the CGW 20 transmits detection information to the analysis device 30 (step S202).

The analysis unit 310 of the analysis device 30 compares the time (detection time) and the CAN-ID included in the detection information received from the CGW 20 with the times and the CAN-IDs included in the pieces of history information held in the memory, and identifies the ECU name and the process name of the attack source (step S203).

Note that, depending on the interval at which the history collection units 110 transmit history information, when the analysis unit 310 receives the detection information, there may be an ECU 10 that has not yet transmitted history information at that time (latest history information). Therefore, for example, the analysis unit 310 may perform the above-described comparison after waiting until the latest history information is received from all the ECUs 10.

In addition, as described above, only the CAN-IDs may be used for the comparison without use of the times. In this case, the analysis unit 310 can compare the CAN-ID included in the detection information received from the CGW 20 with the CAN-IDs included in the pieces of history information held in the memory, and identify the ECU name and the process name corresponding to the matching CAN-ID as the attack sources.

Here, in a case where an attack that inserts attack CAN communication is performed, the CAN communication of the CAN-ID used for the attack is output from at least two or more transmission sources including a normal transmission source (ECU name and process name) and an unauthorized transmission source (ECU name and process name). Therefore, in this case, the analysis unit 310 identifies a plurality of transmission sources as attack source candidates by the above-described comparison, and then identifies the actual attack source from among the candidates. Examples of a method of identifying the actual attack source from among the plurality of attack source candidates include a method of using association information between each of an ECU name and a process name and a CAN-ID determined in advance by design or the like to identify an ECU name and a process name not included in the association information as the actual attack sources. Alternatively, for example, in a case where the attack source candidates are identified by comparison of only the CAN-IDs without use of the times, an attack source candidate that has transmitted CAN communication of the CAN-ID at the time matching the time included in the detection information (detection time) may be identified as the actual attack source.

### [Example 2]

Next, Example 2 will be described. Example 2 is a case where the attack source identifying system 1 does not include the monitoring NW 50, for example, due to cost constraints or the like. Note that, in Example 2, differences from Example 1 will be mainly described, and the description of components similar to those of Example 1 will be omitted.

### <Overall configuration>

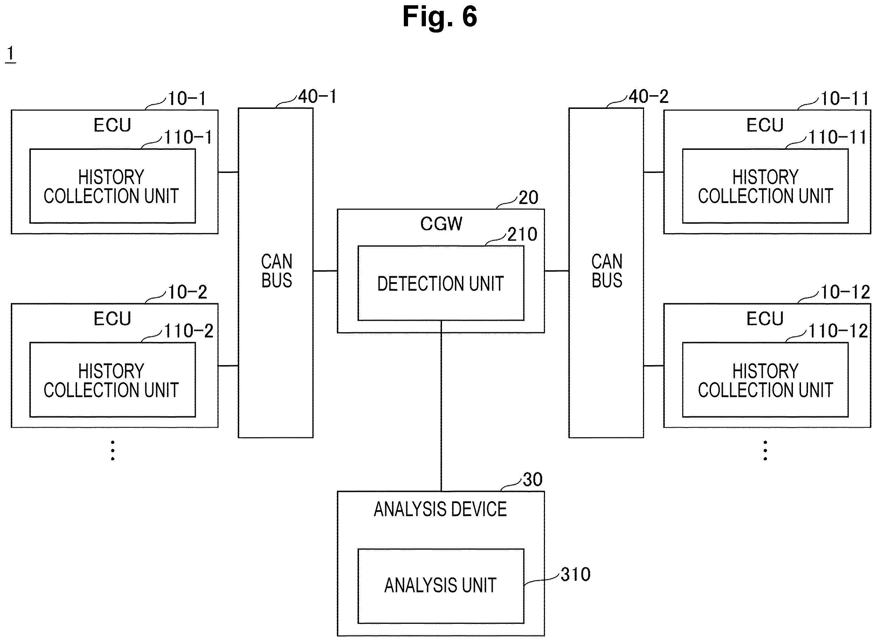

Fig. 6 illustrates an overall configuration of the attack source identifying system 1 according to Example 2. As illustrated in Fig. 6, unlike Example 1, the attack source identifying system 1 according to Example 2 does not include the monitoring NW 50. Therefore, the history collection unit 110 of each of the ECUs 10 transmits history information to the analysis device 30 via one of the CAN buses 40 (and the CGW 20). At this time, in order not to squeeze the communication band of the CAN bus 40, the communication amount of the history information is preferably as small as possible. Therefore, in the present example, the recording/transmission unit 113 of the history collection unit 110 transmits an excerpt of history information to the analysis device 30. Note that the CGW 20 and the analysis device 30 are communicably connected by any communication system.

### <Recording and transmission processing of history information>

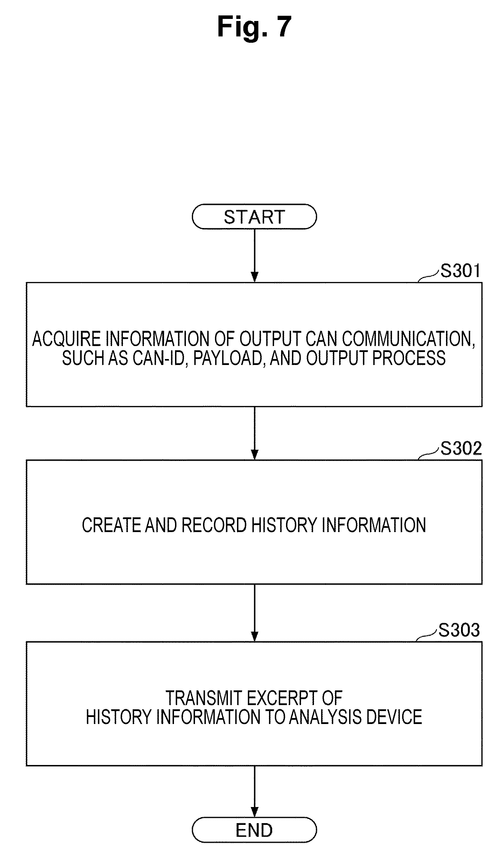

Hereinafter, recording and transmission processing of history information in Example 2 will be described with reference to Fig. 7. Hereinafter, recording and transmission processing of history information related to a certain ECU 10 will be described as an example.

Since steps S301 to S302 in Fig. 7 are similar to steps S101 to S102 in Fig. 4, the description thereof will be omitted.

Subsequent to step S302, the recording/transmission unit 113 of the history collection unit 110 records history information created by the history information creation unit 112 in a memory included in the ECU 10, and transmits an excerpt of the history information (hereinafter, referred to as a history information excerpt) to the analysis device 30 via the CAN bus 40 to which the ECU 10 is connected (step S303). As a result, the history information excerpt is held in the memory of the analysis device 30 by the analysis unit 310 of the analysis device 30.

At this time, for example, the recording/transmission unit 113 can create the history information excerpt from a row in a predetermined period (for example, one minute) of the history information, and transmit the history information excerpt in one frame of CAN communication. Furthermore, the recording/transmission unit 113 transmits the CAN communication using a value unique to the ECU 10 as a CAN-ID. By setting the CAN-ID of the CAN communication representing the history information excerpt to the unique value for each of the ECUs 10, the analysis unit 310 of the analysis device 30 can identify which ECU 10 has transmitted the history information excerpt as the CAN communication.

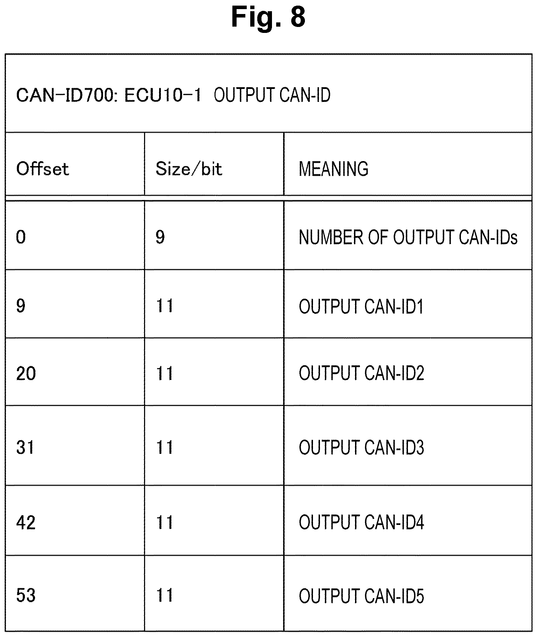

Here, Fig. 8 illustrates an example of bit assignment (bit assignment of a CAN frame) in a case where a history information excerpt is represented by one frame in a standard format of CAN communication. Fig. 8 illustrates an example of bit assignment in a case where CAN-IDs output during a predetermined period (for example, one minute) are extracted as a history information excerpt. Furthermore, the example illustrated in Fig. 8 indicates that the CAN-ID "700" is designated for CAN communication when the ECU 10-1 transmits a history information excerpt.

In the standard format, a CAN-ID is represented by a 11 bit length. Therefore, when the number of CAN-IDs transmitted from the ECU 10 is five or less, it is possible to designate the CAN-IDs in the payload (64 bits at the maximum) as they are and transmit the history information excerpt in only one frame. On the other hand, in a case where malware or the like transmits an additional CAN-ID, the number of CAN-IDs transmitted from the ECU 10 may be six or more, and thus, in this case, there may be a CAN-ID that is not designated in the history information excerpt in one frame. Even in this case, it is possible to convey that there is an undesignated CAN-ID by the "number of output CAN-IDs" designated by nine bits from Offset "0". Note that, when there is a margin in the communication band of the CAN bus 40, the history information excerpt may be represented not only in one frame but also in a plurality of frames.

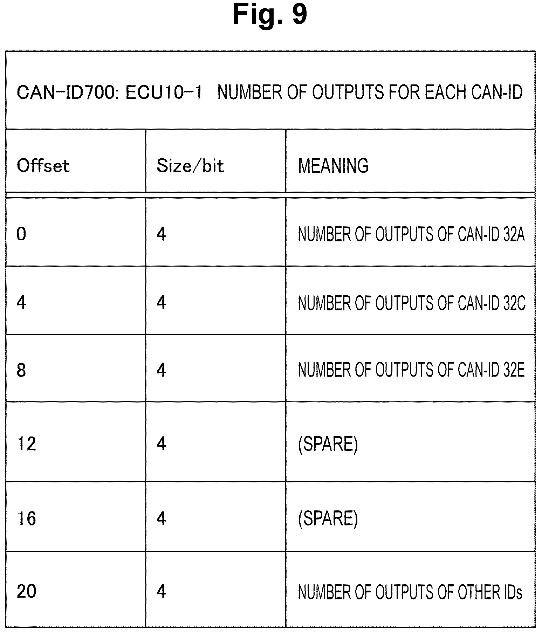

Furthermore, Fig. 9 illustrates an example of bit assignment (bit assignment of a CAN frame) in a case where a history information excerpt is represented by one frame in an extended format of CAN communication. Fig. 9 illustrates an example of bit assignment in a case where the number of outputs of CAN-IDs output during a predetermined period (for example, one minute) is extracted as a history information excerpt. Furthermore, the example illustrated in Fig. 9 indicates that the CAN-ID "700" is designated for CAN communication when the ECU 10-1 transmits a history information excerpt. Note that, in the extended format, CAN-IDs are represented by a 29 bit length.

As illustrated in Fig. 9, in the extended format, for example, the number of outputs of a CAN-ID can be designated every four bits. At this time, in a case where malware or the like transmits an additional CAN-ID, the number of outputs of the CAN-ID is collectively designated as the "number of outputs of other IDs".

### <Attack detection and attack source identification processing>

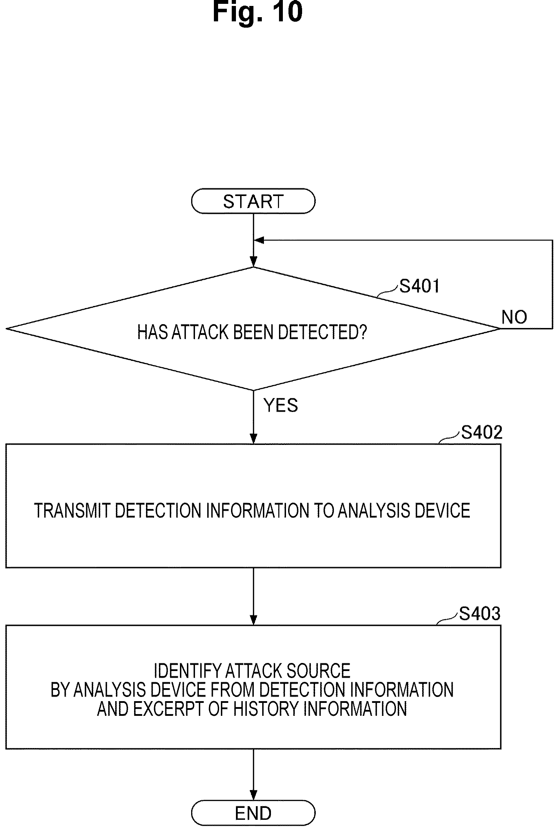

Hereinafter, attack detection and attack source identification processing in Example 2 will be described with reference to Fig. 10.

Since steps S401 to S402 in Fig. 10 are similar to steps S201 to S202 in Fig. 5, the description thereof will be omitted.

Subsequent to step S402, the analysis unit 310 of the analysis device 30 identifies the attack source using the detection information received from the CGW 20 and the pieces of history information excerpt held in the memory (step S403). At this time, the analysis unit 310 may acquire history information that is not an excerpt from the corresponding ECU 10 as necessary, and then perform comparison similar to that in Example 1 to identify the attack source.

For example, in a case where the history information excerpt of the bit assignment illustrated in Fig. 8 is held in the memory, the analysis unit 310 can identify the attack source (ECU 10) by comparing the CAN-ID included in the detection information with CAN-IDs included in history information excerpts. Therefore, the analysis unit 310 may further acquire history information from the ECU 10 and then identify the attack source process.

Furthermore, for example, in a case where the history information excerpt of the bit assignment illustrated in Fig. 9 is held in the memory, and a value of 1 or more is designated for the "number of outputs of other IDs" of the history information excerpt, the analysis unit 310 may acquire the history information corresponding to the history information excerpt from the corresponding ECU 10, and then perform comparison similar to that in Example 1 to identify the attack source.

Note that the history information can be acquired via the CAN bus 40, for example, by the analysis unit 310 being mounted as an ECU diagnostic function.

### [Example 3]

Next, Example 3 will be described. The attack source identifying system 1 in Example 3 may be a combination of Example 1 and Example 2. That is, in the attack source identifying system 1 according to Example 3, only some of the ECUs 10 (for example, the ECU 10-1, the ECU 10-2, and the like) may be connected to the monitoring NW 50, and the other ECUs 10 (for example, the ECU 10-11, the ECU 10-12, and the like) may not be connected to the monitoring NW 50. In this case, the ECUs 10 connected to the monitoring NW 50 can be similar to those in Example 1, and the ECUs 10 not connected to the monitoring NW 50 can be similar to those in Example 3.

### [Summary]

As described above, even in a case where a source address cannot be acquired from a message (or in a case where the acquisition is difficult), the attack source identifying system 1 according to the present embodiment can identify an attack source by comparison with history information such as a transmission history of messages. Therefore, for example, it is possible to efficiently perform cyberattack analysis.

The present invention is not limited to the specifically disclosed embodiment, and various modifications, changes, combinations with known techniques, and the like can be made without departing from the scope of the claims.

### Reference Signs List

- 1: Attack source identifying system
- 10: ECU
- 20: CGW
- 30: Analysis device
- 40: CAN bus
- 50: Monitoring NW
- 110: History collection unit
- 111: Monitor unit
- 112: History information creation unit
- 113: Recording/transmission unit
- 210: Detection unit
- 310: Analysis unit

## Claims

1. An attack source identifying system comprising: a plurality of electronic control devices; a gateway device communicably connected to the plurality of electronic control devices; and an analysis device communicably connected to the plurality of electronic control devices, wherein
each of the electronic control devices includes:
a creation unit configured to create history information of messages transmitted from a process executed by the electronic control device; and
a transmission unit configured to transmit at least a part of the history information to the analysis device,
the gateway device includes
a detection unit configured to detect an attack message from messages transmitted and received by the plurality of electronic control devices, and
the analysis device includes
an identification unit configured to identify a transmission source of the attack message by using detection information related to the attack message and information received from the plurality of electronic control devices in a case where the attack message is detected.

2. The attack source identifying system according to claim 1, wherein
the creation unit
is configured to create history information including a message ID indicating identification information of a message transmitted from a process executed by the electronic control device and a process name indicating a name of the process,
the transmission unit
is configured to transmit information including at least the message ID and the process name to the analysis device, and
the identification unit
is configured to compare a message ID of the attack message included in the detection information with message IDs included in pieces of the information received from the plurality of electronic control devices, and to identify, as transmission sources of the attack message, a process with a process name corresponding to a matching message ID and an electronic control device as a transmission source of information including the message ID.

3. The attack source identifying system according to claim 2, wherein
the transmission unit
is configured to transmit, to the analysis device, information further including a time at which the message is transmitted, and
the identification unit
is configured to further compare a time that is included in the detection information and at which the attack message is detected with times included in the pieces of the information received from the plurality of electronic control devices, and to identify, as transmission sources of the attack message, a process with a process name corresponding to a matching message ID and a matching time and an electronic control device as a transmission source of information including the message ID and the time.

4. The attack source identifying system according to claim 2 or 3, wherein
each of the electronic control devices
further includes an acquisition unit configured to acquire a message ID of a message and a process name of a process executed by the electronic control device each time the message is transmitted from the process, and
the creation unit
is configured to create the history information by using the message ID and the process name acquired by the acquisition unit.

5. The attack source identifying system according to claim 4, wherein
the message is a CAN message, and
the acquisition unit
is configured to acquire a CAN-ID of a CAN message and a process name of a process executed by the electronic control device each time the CAN message is transmitted from the process.

6. An attack source identifying apparatus comprising: a plurality of electronic control devices; a gateway device communicably connected to the plurality of electronic control devices; and an analysis device communicably connected to the plurality of electronic control devices, wherein
each of the electronic control devices includes:
a creation unit configured to create history information of messages transmitted from a process executed by the electronic control device; and
a transmission unit configured to transmit at least a part of the history information to the analysis device,
the gateway device includes
a detection unit configured to detect an attack message from messages transmitted and received by the plurality of electronic control devices, and
the analysis device includes
an identification unit configured to identify a transmission source of the attack message by using detection information related to the attack message and information received from the plurality of electronic control devices in a case where the attack message is detected.

7. An attack source identifying method used in an attack source identifying system including: a plurality of electronic control devices; a gateway device communicably connected to the plurality of electronic control devices; and an analysis device communicably connected to the plurality of electronic control devices, wherein
each of the electronic control devices executes:
a creation step of creating history information of messages transmitted from a process executed by the electronic control device; and
a transmission step of transmitting at least a part of the history information to the analysis device,
the gateway device executes
a detection step of detecting an attack message from messages transmitted and received by the plurality of electronic control devices, and
the analysis device executes
an identification step of identifying a transmission source of the attack message by using detection information related to the attack message and information received from the plurality of electronic control devices in a case where the attack message is detected.

8. A program included in an attack source identifying system including: a plurality of electronic control devices; a gateway device communicably connected to the plurality of electronic control devices; and an analysis device communicably connected to the plurality of electronic control devices, wherein
the program causes
each of the electronic control devices to execute:
a creation step of creating history information of messages transmitted from a process executed by the electronic control device; and
a transmission step of transmitting at least a part of the history information to the analysis device,
the gateway device to execute
a detection step of detecting an attack message from messages transmitted and received by the plurality of electronic control devices, and
the analysis device to execute
an identification step of identifying a transmission source of the attack message by using detection information related to the attack message and information received from the plurality of electronic control devices in a case where the attack message is detected.
